# EUROPÄISCHE PATENTANMELDUNG

(11) **EP 1 065 211 A2**
(43) Veröffentlichungstag der Anmeldung: **03.01.2001**
(21) Anmeldenummer: 00111603.7
(22) Anmeldetag: 31.05.2000
(51) Int. Cl.: C07F 7/18

(54) **Verfahren zur Herstellung von polysulfidischen Silanverbindungen**

(30) Priorität: 01.07.1999 DE 19930495
(71) Anmelder: Degussa-Hüls Aktiengesellschaft, 60287 Frankfurt am Main (DE)
(72) Erfinder: Münzenberg, Jörg, Dr., 63457 Hanau (DE); Michel, Rudolf, 63579 Freigericht (DE)

(57) **Zusammenfassung**

Verfahren zur Herstellung von polysulfidischen Silanverbindungen der allgemeinen Formel

Z-R¹-Sₙ-R¹-Z (I)

wobei man Silylalkylhalogenide der Formel

ZR¹X (II)

mit Alkalipolysulfiden der Formel

M₂Sₙ, (III)

umsetzt, wobei man
Alkalipolysulfide M₂Sₙ durch Reaktion von Alkalihydroxiden der allgemeinen Formel (IV)

MOH (IV)

und elementarem Schwefel in nicht-wäßrigem Lösungsmittel oder in Substanz erhält.

## Beschreibung

Die Erfindung betrifft ein Verfahren zur Herstellung von polysulfidischen Silanverbindungen.

In der Gummiindustrie sind Kieselsäure-gefüllte Gummiartikel bekannt. Gegenüber der älteren Technologie haben diese Gummiartikel verschiedene Vorteile, wie zum Beispiel für den Bereich der Reifen u.a. ein verbessertes Naßrutschverhalten und einen geringeren Rollwiderstand. Um diese guten Eigenschaften erreichen zu können, sind als Hilfsverbindungen polysulfidische Silanverbindungen notwendig. Diese Verbindungen wirken als Haftvermittler zwischen dem Füllstoff Kieselsäure und dem organischen Polymer und sorgen für eine Absenkung der Mischungsviskosität beim Einmischen des Füllstoffs.

Verschiedene Verfahren zur Herstellung der bekannten polysulfidischen Silane werden in mehreren Anmeldungen beschrieben. Dabei gehen die meisten Methoden von Alkoxysilylaklylhalogeniden aus, die mit auf unterschiedliche Weisen hergestellten Alkalipolysulfiden umgesetzt werden.

Gemäß US 5405985 wird ein Alkalipolysulfid durch Reaktion von Alkalisulfid mit Schwefel in wäßriger Lösung hergestellt. Durch Umsetzung der entstehenden wäßrigen Polysulfidlösung mit Alkoxysilylalkylhalogeniden in einem phasentransferkatalytischen System werden die polysulfidischen Haftvermittler erhalten. Es ist bekannt, daß sowohl Alkoxysilylalkylhalogenide als auch die daraus entstehenden Reaktionsprodukte hydrolyseanfällig sind. Deshalb hat dieses Verfahren den Nachteil, daß nach Hydrolyse und Kondensation Polymere gebildet werden, die bei Einsatz in der Gummimischung keine beziehungsweise eine stark reduzierte Verstärkungswirkung zeigen.

Aus diesem Grund werden bei anderen bekannten Verfahren wasserfreie Systeme verwendet. So kann ein wasserfreies Polysulfid zum Beispiel in einer vorgeschalteten Synthese aus elementarem Schwefel und elementarem Natrium erhalten werden (US 4640832). Alternative Herstellungsmethoden von wasserfreiem Alkalipolysulfiden gehen von elementarem Natrium und Alkoholen (US 5399739) beziehungsweise von Alkalialkoholaten, Schwefelwasserstoff und Schwefel (US 5596116) aus. Eine andere Variante nutzt Alkalihydrogensufid und Natriumalkoholat in Verbindung mit Schwefel zur Herstellung des Polysulfids (DE 3311340).

Diese bekannten Verfahren haben den Nachteil, daß bei der Natriumpolysulfid-Herstellung kostspielige Einsatzstoffe wie Alkalimetalle oder Alkalimetallalkoholate beziehungsweise toxikologisch und ökotoxikologisch bedenklicher Schwefelwasserstoff eingesetzt werden müssen.

Es ist weiterhin bekannt kommerziell erhältliches wasserfreies Natriumsulfid zu trocknen und dann in 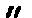 organischen" Lösungsmitteln mit Schwefel umzusetzen. Für die Trocknung des wasserhaltigen Natriumsulfids werden sowohl Verfahren der Kontakttrocknung unter reduziertem Druck (JP 7228588, DE 19755760, EP 361998) als auch azeotrope Trocknungen (DE 19610281, JP 7228588) angewandt. Diese bekannten Verfahren haben den Nachteil, daß Natriumsulfid beim Erhitzen stark zum Schmelzen neigt, was bei gering vom Optimum abweichenden Bedingungen zum Anhaften des Trockungsgutes an den Behälterwandungen und damit zu Verlusten an wertvollem Produkt führt. Getrocknetes Natriumsulfid neigt außerdem zur Selbstentzündung, so daß erheblicher sicherheitstechnischer Aufwand für die Trocknung nötig ist, der eine technische Umsetzung unwirtschaftlich macht.

Gemäß US 5663396 ist ein Verfahren bekannt, bei dem das Polysulfid in wäßriger Lösung aus Natronlauge und Schwefel hergestellt wird. Die entstehende Polysulfidlösung wird dann wiederum in einem phasentransferkatalytischen System mit Alkoxysilylalkylhalogeniden umgesetzt. Auch bei dieser Vorgehensweise ist die Gefahr groß, daß zumindest Teile der Ausgangsverbindung beziehungsweise des Produkts zu anwendungstechnisch unwirksame Polymere umgesetzt werden.

Aufgrund der oben beschriebenen Nachteile des Stands der Technik bestand Bedarf an einem technisch einfach durchzuführendem und gleichzeitig ökonomisch interessantem Verfahren zur Herstellung von wasserfreien Alkalipolysulfiden, die für die Produktion von den genannten polysulfidischen Silanverbindungen genutzt werden können.

Gegenstand der Erfindung ist ein Verfahren zur Herstellung von polysulfidischen Silanverbindungen der allgemeinen Formel (I)

Z-R¹-Sₙ-R¹-Z, (I)

in der
R¹ verzweigte oder unverzweigte, gegebenenfalls durch O-, N- oder S-Atome unterbrochene Alkylgruppen mit 1 bis 8 C-Atomen oder Alkylaromaten der Form (CH₂)ₚPh(CH₂)ₚ mit 8 bis 14 C-Atomen, wobei p eine ganze Zahl von 1 bis 4 ist und n eine ganze Zahl von 1 bis 4 ist, darstellt,
Z Reste der Form (R²O)₃₋ₘR²ₘSi darstellt, bei denen die Reste R² gleich oder verschieden sein können und aus verzweigten oder unverzweigten Alkylresten mit 1 bis 6 C-Atomen bestehen und m 0, 1 oder 2 ist,
   wobei man Silylalkylhalogenide der allgemeinen Formel (II)

   ZR¹X, (II)

   in der X Cl, Br oder I entspricht, und Z und R¹ die oben angegebenen Bedeutungen haben,
   mit Alkalipolysulfiden der allgemeinen Formel (III)

   M₂Sₙ, (III)

   wobei M für die Alkalimetalle Na und K steht, und n die oben angegebene Bedeutung hat,
   umsetzt, welches dadurch gekennzeichnet ist, daß man die
   Alkalipolysulfide M₂Sₙ durch Reaktion von Alkalihydroxiden der allgemeinen Formel (IV)

   MOH, (IV)

   in der M die oben angegebende Bedeutung hat und elementarem Schwefel in nicht-wäßrigem Lösungsmittel oder in Substanz erhält.

Die Herstellung von Alkalipolysulfid kann unter Schutzgas bei Normaldruck oder bei Unterdruck erfolgen, wobei entstehendes Wasser abdestilliert wird. Als Schutzgas können Stickstoff, Helium oder Argon verwendet werden. Der Druckbereich kann von 1 bar bis 0,1 mbar reichen. Die Reaktionstemperatur kann von 50°C bis 250°C, vorzugsweise 80°C bis 150°C, betragen. Nach dem Abklingen der Exothermie kann zur Vervollständigung der Reaktion bei 100°C bis 250°C, vorzugsweise 130°C bis 170°C, für eine Dauer von 0,5 bis 4 Stunden, vorzugsweise 2 bis 3 Stunden, die Temperatur gehalten werden.

Als nicht-wäßriges Lösungsmittel können hochsiedende Ether oder Polyether, gesättigte Kohlenwasserstoffe oder Aromate, bevorzugt Xylol, Mesitylen oder Naphthalin, oder Mischungen hiervon eingesetzt werden.

Das erfindungsgemäße Verfahren hat gegenüber dem Stand der Technik den Vorteil, daß in einem nahezu wasserfreiem System gearbeitet werden kann. Bei der Reaktion zwischen Alkalihydroxid und Schwefel entstehendes Wasser wird bereits bei der Reaktion aus dem Produkt entfernt, so daß das als Feststoff entstehende Alkalipolysulfid in einem wasserfreien System zu Alkoxysilylalkylpolysulfiden umgesetzt werden kann.

### Beispiel 1

In einem mit 200 ml Xylol gefüllten 500 ml Dreihalskolben mit Wasserabscheider und Innenthermometer werden 60,0 g NaOH-Grieß und 43,3 g Schwefelpulver vorgelegt. Die Mischung wird unter Stickstoff auf 110°C erhitzt. Bei dieser Temperatur wird eine schwach exotherme Reaktion beobachtet. Anschließend wird auf 130°C erhitzt, wobei entstandenes Wasser azeotrop abdestilliert wird (ca. 12 ml). Nach Abkühlen wird Xylol vom entstandenen gelben Feststoff abdekantiert.
Der gelbe Feststoff wird unter trockenem Stickstoff in 160 ml Ethanol aufgenommen und mit 163,0 g 3-Chlorpropyltriethoxysilan versetzt. Anschließend wird auf 60°C aufgeheizt. Bei dieser Temperatur ist wiederum eine Exothermie zu bemerken, die die Reaktionsmischung auf Siedetemperatur erhitzt. Nach Abklingen der Exothermie wird weitere 2 h unter Rückfluß erhitzt, abgekühlt und vom gebildeten Feststoff abfiltriert. Der Filterkuchen wird drei mal mit je 100 ml Ethanol gewaschen. Die gesammelten Filtrate werden im Rotationsverdampfer bei 110°C und nachgeregeltem Vakuum eingedampft. Man erhält 149,1 g einer gelben Flüssigkeit (Ausbeute: 93 % bezogen auf eingesetztes 3-Chlorpropyltriethoxysilan). Nach dem ¹H-NMR-Spektrum besteht das Produkt aus einem Polysulfangemisch mit einer mittleren Schwefelkettenlänge von 2,1.

### Beispiel 2

In einem 500 ml Kolben, der längsseitig mit Einkerbungen versehen ist, werden 60,0 g NaOH-Grieß und 40,0 g pulverförmiger Schwefel vorgelegt. Nach Homogenisierung des Kolbeninhalts wird dieser an einen Rotationsverdampfer angeschlossen und auf 1 mbar evakuiert. Bei langsamer Kolbendrehung wird in einem Ölbad auf 100°C aufgeheizt. Bei dieser Temperatur wird eine Verfärbung des Kolbeninhalts von gelb nach orange festgestellt. Bei 110°C Ölbadtemperatur entwickelt sich eine starke Exothermie und es wird Wasser freigesetzt. Nach Abklingen dieser Exothermie wird auf 170°C aufgeheizt und zur Homogenisierung des Reaktionsgemischs und Vervollständigung der Reaktion 3 h auf dieser Temperatur gehalten. Nach Abkühlen auf Raumtemperatur und Belüften mit trockenem Stickstoff werden 86,9 g eines orangegelben Feststoffs isoliert.
In einem 500 ml Dreihalskoben mit Rückflußkühler und Innenthermometer werden 78,2 g dieses Feststoffs unter trockenem Stickstoff in 195 ml Ethanol vorgelegt und zusammen mit 195,1 g 3-Chlorpropyltriethoxysilan auf 55°C aufgeheizt. Bei dieser Temperatur wird eine Exothermie beobachtet, die das Reaktionsgemisch auf Siedetemperatur aufheizt. Nach Abklingen dieser Exothermie läßt man weitere 2 h unter Rückfluß reagieren und anschließend auf Raumtemperatur abkühlen. Der entstandene Feststoff wird abfiltriert und der Filterkuchen dreimal mit jeweils 100 ml Ethanol gewaschen. Die vereinigten Filtrate werden im Rotationsverdampfer bei 110°C und nachgeregeltem Vakuum eingedampft. Man erhält 179,4 g einer gelben Flüssigkeit (Ausbeute: 93 %, bezogen auf eingesetztes 3-Chlorpropyltriethoxysilan). Nach dem ¹H-NMR-Spektrum besteht das Produkt aus einem Polysulfangemisch mit einer mittleren Schwefelkettenlänge von 2,1.

### Beispiel 3

In dem Kolben des Beispiels 2 werden 60,0 g NaOH-Grieß und 72,1 g pulverförmiger Schwefel vorgelegt. Nach Homogenisierung des Kolbeninhalts wird dieser an einen Rotationsverdampfer angeschlossen und auf 1 mbar evakuiert. Bei langsamer Kolbendrehung wird in einem Ölbad auf 100°C aufgeheizt. Bei dieser Temperatur wird eine Farbvertiefung festgestellt. Bei 110°C Ölbadtemperatur entwickelt sich eine starke Exothermie und es wird Wasser freigesetzt. Nach Abklingen dieser Exothermie wird auf 170°C aufgeheizt und zur Homogenisierung des Reaktionsgemischs und Vervollständigung der Reaktion 3 h auf dieser Temperatur gehalten. Nach Abkühlen auf Raumtemperatur und Belüften mit trockenem Stickstoff werden 115,6 g eines orangegelben Feststoffs isoliert.
In einem 500 ml Dreihalskoben mit Rückflußkühler und Innenthermometer werden 59,3 g dieses Feststoffs unter trockenem Stickstoff in 150 ml Ethanol vorgelegt und zusammen mit 114,4 g 3-Chlorpropyltriethoxysilan auf 55°C aufgeheizt. Bei dieser Temperatur wird eine Exothermie beobachtet, die das Reaktionsgemisch auf Siedetemperatur aufheizt. Nach Abklingen dieser Exothermie läßt man weitere 2 h unter Rückfluß reagieren und anschließend auf Raumtemperatur abkühlen. Der entstandene Feststoff wird nach Zugabe von Filterhilfsmittel abfiltriert und der Filterkuchen zweimal mit jeweils 50 ml Ethanol gewaschen. Die vereinigten Filtrate werden im Rotationsverdampfer bei 110°C und nachgeregeltem Vakuum eingedampft. Man erhält 119,7 g einer gelben Flüssigkeit (Ausbeute: 94 % bezogen auf eingesetztes 3-Chlorpropyltriethoxysilan). Nach dem ¹H-NMR-Spektrum besteht das Produkt aus einem Polysulfangemisch mit einer mittleren Schwefelkettenlänge von 3,7.

### Beispiel 4

In dem Kolben des Beispiels 2 werden 84,2 g KOH-Pulver und 40,1 g pulverförmiger Schwefel vorgelegt. Nach Homogenisierung des Kolbeninhalts wird dieser an einen Rotationsverdampfer angeschlossen und auf 1 mbar evakuiert. Bei langsamer Kolbendrehung wird in einem Ölbad auf 80°C aufgeheizt. Bei dieser Temperatur wird eine Verfärbung nach Gelborange festgestellt. Es wird eine starke Exothermie festgestellt, weiterhin wird Wasser freigesetzt. Nach Abklingen dieser Exothermie wird auf 160°C aufgeheizt und zur Homogenisierung des Reaktionsgemischs und Vervollständigung der Reaktion 3 h auf dieser Temperatur gehalten. Nach Abkühlen auf Raumtemperatur und Belüften mit trockenem Stickstoff werden 102,0 g eines orangegelben Feststoffs isoliert.
In einem 500 ml Dreihalskoben mit Rückflußkühler und Innenthermometer werden 55,4 g dieses Feststoffs unter trockenem Stickstoff in 200 ml Ethanol vorgelegt und zusammen mit 114,4 g 3-Chlorpropyltriethoxysilan auf 55°C aufgeheizt. Bei dieser Temperatur wird eine Exothermie beobachtet, die das Reaktionsgemisch auf Siedetemperatur aufheizt. Nach Abklingen dieser Exothermie läßt man weitere 2 h unter Rückfluß reagieren und anschließend auf Raumtemperatur abkühlen. Der entstandene Feststoff wird abfiltriert und der Filterkuchen zwei mal mit jeweils 50 ml Ethanol gewaschen. Die vereinigten Filtrate werden im Rotationsverdampfer bei 110°C und nachgeregeltem Vakuum eingedampft. Man erhält 102,4 g einer braunen Flüssigkeit (Ausbeute: 91 %, bezogen auf eingesetztes 3-Chlorpropyltriethoxysilan). Nach dem ¹H-NMR-Spektrum besteht das Produkt aus einem Polysulfangemisch mit einer mittleren Schwefelkettenlänge von 2,0.

## Patentansprüche

1. Verfahren zur Herstellung von polysulfidischen Silanverbindungen der allgemeinen Formel (I)
Z-R¹-Sₙ-R¹-Z, (I)
in der
R¹ verzweigte oder unverzweigte, gegebenenfalls durch O-, N- oder S-Atome unterbrochene Alkylgruppen mit 1 bis 8 C-Atomen oder Alkylaromaten der Form (CH₂)ₚPh(CH₂)ₚ mit 8 bis 14 C-Atomen, wobei p eine ganze Zahl von 1 bis 4 ist, n eine ganze Zahl von 1 bis 4 ist, darstellt, und
Z Reste der Form (R²O)₃₋ₘR²ₘSi darstellt, bei denen die Reste R² gleich oder verschieden sein können und aus verzweigten oder unverzweigten Akylresten mit 1 bis 6 C-Atomen bestehen und m 0, 1 oder 2 ist,
wobei man Silylalkylhalogenide der allgemeinen Formel (II)
ZR¹X, (II)
in der X Cl, Br oder I entspricht, und Z und R¹ die oben angegebenen Bedeutungen haben,
mit Alkalipolysulfiden der allgemeinen Formel (III)
M₂Sₙ, (III)
wobei M für die Alkalimetalle Na und K steht, und n die oben angegebene Bedeutung hat,
umsetzt, dadurch gekennzeichnet, daß man die
Alkalipolysulfide M₂Sₙ durch Reaktion von Alkalihydroxiden der allgemeinen Formel (IV)
MOH, (IV)
in der M die oben angegebende Bedeutung hat und elementarem Schwefel in nicht-wäßrigem Lösungsmittel oder in Substanz erhält.
